# EUROPEAN PATENT SPECIFICATION

(11) **EP 3 395 539 B1**
(45) Date of publication and mention of the grant of the patent: **04.11.2020**
(21) Application number: 18154946.0
(22) Date of filing: 02.02.2018
(51) Int. Cl.: B29C 64/106, B29C 64/112, B29C 64/386, B29C 64/118, B33Y 10/00, B33Y 30/00, B33Y 50/00, B33Y 50/02, B29C 64/393

(54) **COLOR THREE-DIMENSIONAL PRINTING METHOD AND THREE-DIMENSIONAL PRINTING EQUIPMENT**
DREIDIMENSIONALES FARBDRUCKVERFAHREN UND DREIDIMENSIONALE DRUCKVORRICHTUNG
PROCÉDÉ D'IMPRESSION TRIDIMENSIONNELLE COULEUR ET ÉQUIPEMENT D'IMPRESSION TRIDIMENSIONNELLE

(30) Priority: 28.04.2017 TW 106114349
(43) Date of publication of application: 31.10.2018
(73) Proprietor: XYZprinting, Inc., New Taipei City 22201 (TW); Kinpo Electronics, Inc., New Taipei City 22201 (TW)
(72) Inventor: Ho, Kwan, 22201 New Taipei City (TW); Huang, Yu-Ting, 22201 New Taipei City (TW); Hsieh, Hsin-Ta, 22201 New Taipei City (TW)
(74) Representative: 2K Patentanwälte Blasberg Kewitz & Reichel

(56) References cited:
- EP-A1- 2 985 134
- WO-A1-2016/003277
- WO-A1-2016/003277
- WO-A2-2012/058278
- WO-A2-2012/058278
- US-A1- 2016 101 617
- US-A1- 2016 101 617

## Description

### BACKGROUND

### [Technical Field]

The disclosure relates to a printing method and particularly relates to a color three-dimensional printing method and a three-dimensional printing equipment.

### [Description of Related Art]

With the progress of computer-aided manufacturing (CAM), the manufacturing industry has developed three-dimensional printing technology able to rapidly manufacture an original concept of a design. The 3D printing technology is actually a general term of a series of rapid prototyping (RP) technologies. Their basic principles are all related to lamination manufacturing. A rapid prototyping machine forms a cross section shape of a workpiece by scanning in an X-Y plane, and intermittently displaces in thickness of a layer in a Z-coordinate, and forms a 3D object finally. The 3D printing technology does not limit a geometric shape, and even, a more complex part is manufactured, more prominence of RP technology is shown. Further, manpower and processing time can be greatly reduced. Within the minimum time limit, a digital 3D model designed by a computer-aided design (CAD) software can be realized.
EP 2 985 134 A1 discloses a process and a device to colour a part manufactured by using a 3D printing process of the "Fused Filament Fabrication" (FFF) or "Fused Deposition Modelling" (FDM) type, using UV ink dispensed by inkjet printing processes. Specifically, it consists on an upgrade for common 3D FFF printing machines that allows them to print coloured parts.
WO2016003277 (A1) relates to a device for forming a workpiece by means of 3D extrusion, comprising a horizontally extending work platform movable in a vertical direction for the workpiece, an extrusion head displaceable relative to the work platform in a horizontal direction above the work platform, feed means for feeding material for extrusion to the extrusion head, and a control member for controlling the displacement of the work platform, the displacement of the extrusion head and the extrusion head. The device comprises an inkjet head which is displaceable in horizontal direction, connected to an ink reservoir and controllable by the control member for directing the ink jet downward, and the control member is configured to control the inkjet head, the displacement of the inkjet head, and after a layer of extrusion material has been arranged, the application of at least one layer of ink thereto.
WO2012/058278A2 discloses a fabrication process and apparatus for producing three-dimensional objects by depositing a first polymer layer, printing a first ink layer on to the first polymer layer, depositing a second polymer layer on to the first ink layer, and printing a second ink layer on to the second polymer layer. The deposition and printing steps may be repeated until a three-dimensional object is formed. The inks used to form at least one of the first and second ink layers may include dyes or pigments so that the three-dimensional object may be a colored three-dimensional object.

For example, fused deposition modeling (FDM) technology turns a forming material into a wire, and heats and melts the forming material to stack the material layer by layer on a forming stage according to the desired shape/contour to form a 3D object. Thus, in the conventional color FDM 3D printing method, the exterior is usually colored after the three-dimensional object is completed, or the three-dimensional object is manufactured by using a colored forming material. In the former case, however, the color ink is only applied to the outer surface of the three-dimensional object, which may be slightly inferior in color properties and variability. In the latter case, it will be required to repeatedly switch to wire materials of different colors in order to achieve the effect of multiple colors, as a result, the efficiency of manufacturing a colored three-dimensional object is low. Accordingly, how to improve the above situation is an issue to be considered by people in the related art.

### SUMMARY

In this regard, the disclosure provides a color three-dimensional printing method and a three-dimensional printing equipment, able to improve the diversity and aesthetics of color 3D printing. The invention is defined in the independent claims. Preferred embodiments are set forth in the dependent claims.

The disclosure provides a color three-dimensional printing method adapted for manufacturing a 3D object according to a 3D model. The 3D object includes a plurality of layer objects. The method includes the steps as defined by claim

From another point of view, the disclosure provides a three-dimensional printing equipment as defined by claim 1.

Based on the above, the color three-dimensional printing method and the three-dimensional printing equipment of the disclosure use the printing head to form a layer object on a stage and then use the inkjet head to spray ink on the layer object to form an ink layer. Such that, the layer object of each layer of the colored 3D object has a colored appearance so that the overall color property is improved. Also, different regions of each color ink layer may have different colors so that color variability is improved.

To make the aforementioned and other features and advantages of the disclosure more comprehensible, several embodiments accompanied with drawings are described in detail as follows.

### BRIEF DESCRIPTION OF THE DRAWINGS

FIG. 1 is a schematic view of a three-dimensional printing equipment according to an exemplary embodiment of the disclosure.
FIG. 2 is a schematic view of a 3D printing device according to an exemplary embodiment of the disclosure.
FIG. 3 is a flowchart of a color 3D printing method according to an exemplary embodiment of the disclosure.
FIG. 4 is a schematic view of a color 3D printing method according to an exemplary embodiment of the disclosure.
FIG. 5 is a flowchart of adjusting an inkjet position on a horizontal plane according to an exemplary embodiment of the disclosure.
FIG. 6 is a schematic view of adjusting an inkjet position on a horizontal plane according to an exemplary embodiment of the disclosure.

### DESCRIPTION OF EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

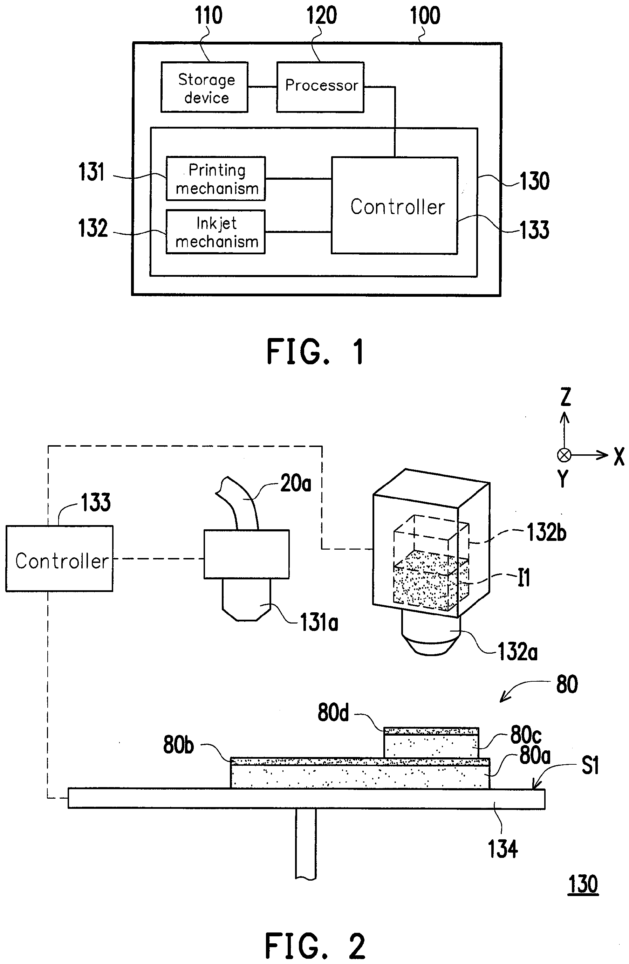

FIG. 1 is a schematic view of a three-dimensional printing equipment according to an exemplary embodiment. Referring to FIG. 1, a 3D printing equipment 100 includes a storage device 110, a processor 120 and a 3D printing device 130. The processor 120 is coupled to the storage device 110 and the 3D printing device 130. In this embodiment, the processor 120 is configured to model a 3D object to establish a 3D model, wherein the 3D model conforms to a 3D file format such as a polygon file format (PLY) or an OBJ file. The 3D model in the 3D file format is composed of a plurality of polygon meshes and each of the polygon meshes has a plurality of vertices, wherein each of these vertices has a different coordinate. In this embodiment, the processor 120 is configured to perform a slicing processing on the 3D model in a 3D model image to obtain slicing information. The slicing information includes a printing path file and a plurality of inkjet images. According to the slicing information, the processor 120 controls the 3D printing device 130 to perform a 3D printing operation so that the 3D printing device 130 manufactures a plurality of layer objects layer by layer and colors these layer objects layer by layer.

In this embodiment, the storage device 110 is configured to store data and be a buffer memory, an internal storage medium, an external storage medium, other types of storage devices or a combination of these devices. For instance, the buffer memory may include a random access memory, a read only memory or other similar devices. For instance, the internal storage medium may include a hard disk drive (HDD), a solid state disk, a flash storage device or other similar devices. For instance, the external storage medium may include an external hard drive, a USB drive, a cloud drive, or other similar devices. In this embodiment, the storage device 110 may be used to store the 3D model image, a plurality of slicing images, a 3D image modeling module, an image processing module or an image analysis module, etc., so as to realize the slicing image processing of each of the exemplary embodiments of the disclosure.

In this embodiment, the processor 120 is configured to execute a plurality of modules stored in the storage device 110 so as to realize the image processing and image analysis of each of the exemplary embodiments of the disclosure. The processor 120 may be a central processing unit (CPU), or other programmable general/specific purpose microprocessors, a digital signal processor (DSP), a programmable controller, application specific integrated circuits (ASIC), a programmable logic device (PLD), other similar processing device or a combination of these devices.

According to the invention, the 3D printing device 130 includes a controller 133, a printing mechanism 131 and an inkjet mechanism 132. The processor 120 provides, according to the slicing information, a control signal to the controller 133 of the 3D printing device 130 to drive the 3D printing device 130, The controller 133 of the 3D printing device 130 controls the printing mechanism 131 and the inkjet mechanism 132 to perform the 3D printing operation and an inkjet operation. For example, the 3D printing operation includes feeding out a forming material and the 3D printing device 130 may perform the inkjet operation on the cured forming material. Further, people having ordinary skills in the art shall understand that the three-dimensional printing device 130 may also include other components required to perform three-dimensional printing together with a printing head (such as a stage, a feeding line, an inkjet line, a printing head linking mechanism, and the like).

Further, FIG. 2 is a schematic view of a 3D printing device illustrated according to an exemplary embodiment of the disclosure. Referring to FIG. 2, the 3D printing device 130 includes a stage 134, a printing head 131a, an inkjet head 132a and the controller 133. Here, a Cartesian coordinate system is provided on the drawing so as to describe relevant components and their movement. The stage 134 includes a carrying surface S1 for carrying a 3D object 80 in printing, and the stage 134 is provided below the printing head 131a and the inkjet head 132a.

In detail, in this embodiment, the printing head 131a is disposed to move along a XY plane and a normal direction (Z-axis direction) of the XY plane. A forming material 20a is fed into the printing head 131a via a feeding line to be thermally melted, and is extruded through the printing head 131a to be molded layer by layer on the carrying surface S1 of the stage 134 such that a plurality of layer objects (FIG. 2 takes layer objects 80a and 80c as examples) are formed. In this sense, the layer objects 80a and 80c formed layer by layer stack each other on the carrying surface S1 to formed a 3D object 80. Specifically, the forming material 20a may be composed of a thermofusible material adapted to a manufacturing method such as a fused filament fabrication (FFF) and a melted and extrusion modeling, which the exemplary examples are not intended to limit.

In this embodiment, the inkjet head 132a sprays ink I1 layer by layer on each of the layer objects to form a plurality of ink layers (FIG. 2 takes ink layers 80b and 80d as examples). Forming the ink layers 80b and 80d on the layer objects 80a and 80c refers to overlapping and covering the upper surfaces of the layer objects 80a and 80c by ink I1 and simultaneously dyeing the interior of the layer objects 80a and 80c. Therefore, the inkjet head 132a includes an ink cartridge 132b. The ink cartridge 132b is configured for holding the ink I1. The inkjet head 132a sprays the ink I1 in the ink cartridge 142 on the layer objects 80a and 80c as needed to color the layer objects 80a and 80c. Thereby, the ink layers 80b and 80d are formed on the layer objects 80a and 80c. Although FIG. 2 merely illustrates one ink cartridge 132b, the exemplary examples are not intended to limit an amount of the ink cartridge and ink color. In an embodiment, the inkjet head 132a is similar to a color inkjet system for a two-dimensional color printing device able to spray a plurality of color ink corresponding to different colors on the layer objects 80a and 80c according to a ratio of color formation, to form the ink layers 80b and 80d. The colors of the color ink include cyan, magenta, yellow and black in accordance with printing primary colors, which are not limited in the disclosure. It should be stated that in an embodiment, the forming material 20a may be a light-transmittable material, for example, a transparent polylactic acid (PLA) material or a transparent acrylic material. Since the forming material 20a has light-transmittance, the color performance of each ink layers may be seen as the color performance of the corresponding layer object.

With such arrangement, in this embodiment, after the printing head 131a prints the layer object 80a upon the stage 134, the inkjet head 132a may spray the ink layer 80b on the upper surface of the layer object 80a so as to color the layer object 80a. Then, after the printing head 131a prints another layer object 80c upon the stage 134, the inkjet head 132a may spray the ink layer 80d on the upper surface of the layer object 80c so as to color the layer object 80c. Such that, the layer objects 80a and 80c sequentially stack across the ink layers 80b and 80d so that a color 3D object 80 is formed, wherein the inkjet range and pattern of each ink layer are determined by a plurality of inkjet images in the slicing information.

The controller 133 coupled to the stage 134, the printing head 131a and the inkjet head 132a is used to receive the slicing information provided by the processor 120 and to control the overall operation of the 3D printing device 130 according to the slicing information so that the 3D object 80 is printed out. For instance, according to a printing path file, the controller 133 controls a movement path of the printing head 131a according to the printing path file, and the printing path file is, for example, a control code file such as a G-code. The controller 133 is, for example, an equipment having a computing function such as a CPU, a chipset, a microprocessor, an embedded controller and the like, the disclosure provides no limitation thereto.

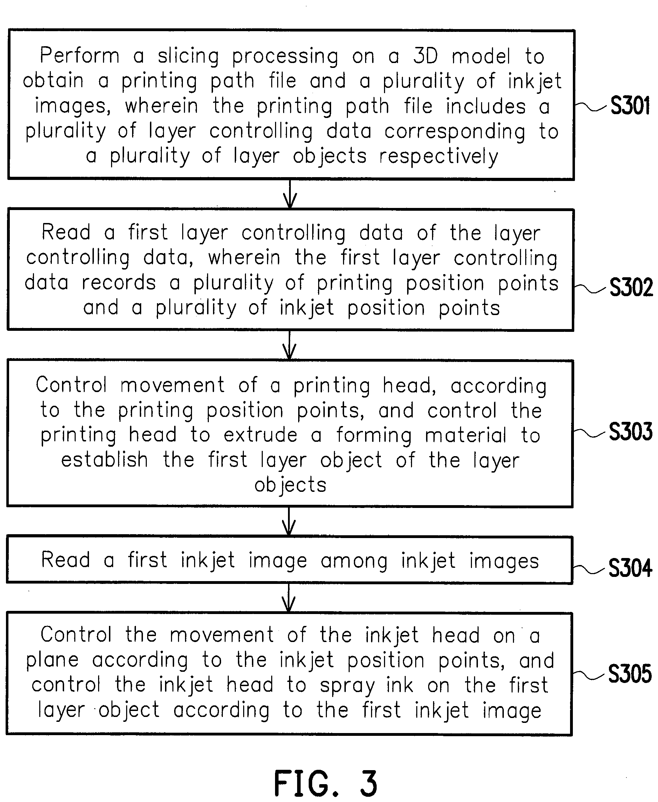

FIG. 3 is a flowchart of a color 3D printing method according to the invention. This method is applied to the 3D printing equipment 100 of FIG. 1 and the 3D printing device 130 of FIG. 2. Hereinafter, the detailed steps of the 3D printing method of this embodiment are described with the components in the 3D printing equipment 100 and 3D printing device 130.

First, in step S301, the processor 120 performs the slicing processing on the 3D model to obtain the printing path file and a plurality of inkjet images, wherein the printing path file includes a plurality of layer controlling data corresponding to a plurality of layer objects respectively. The processor 120, according to a slicing thickness anticipated by the user, generates a plurality of slicing planes parallel to each other and performs the slicing processing on the 3D model via the plurality of the slicing planes to obtain the printing path file and the plurality of the inkjet images. Each of the layer controlling data in the printing path file respectively corresponds to a different layer object so that the controller 133 may control the 3D printing device 130 according to each of the layer controlling data to establish each of the layer objects layer by layer. In this embodiment, the printing path file is a file format readable by the controller 133. The controller 133 may, according to the printing path file, control the movement path and position of the printing head 131a and the inkjet head 132a. In addition, when the processor 120 performs the slicing processing on the colored 3D model, the inkjet images corresponding to all or a part of the layer objects will be generated.

In step S302, the controller 133 reads a first layer controlling data in the layer controlling data, wherein the first layer controlling data records a plurality of printing position points and a plurality of inkjet position points. The printing path file is G-code, for example, including control code segments respectively corresponding to different layer objects and the control code segments are called layer controlling data. The first layer controlling data corresponding to a first layer object among the plurality of layer controlling data include coordinates of the plurality of the printing position points and the plurality of the inkjet position points. Then, in step S303, the controller 133, according to the printing position points, controls the movement of the printing head 131a to extrude the forming material 20a to establish the first layer object in the layer objects.

Then, in step S304, the controller 133 reads a first inkjet image among the inkjet images. Further, according to an instruction in the first layer controlling data of the first layer object, the controller 133 reads the first inkjet image corresponding to the first layer object. In step S305, the controller 133, according to the inkjet position points, controls the movement of the inkjet head 132a on the XY plane and controls the inkjet head 132a according to the first inkjet image to spray the ink I1 on the first layer object. However, although only the single first layer object is served as an example to the above, people of ordinary skill in the art of the exemplary examples may deduce the operations of the above steps S302 to S305 to each layer object.

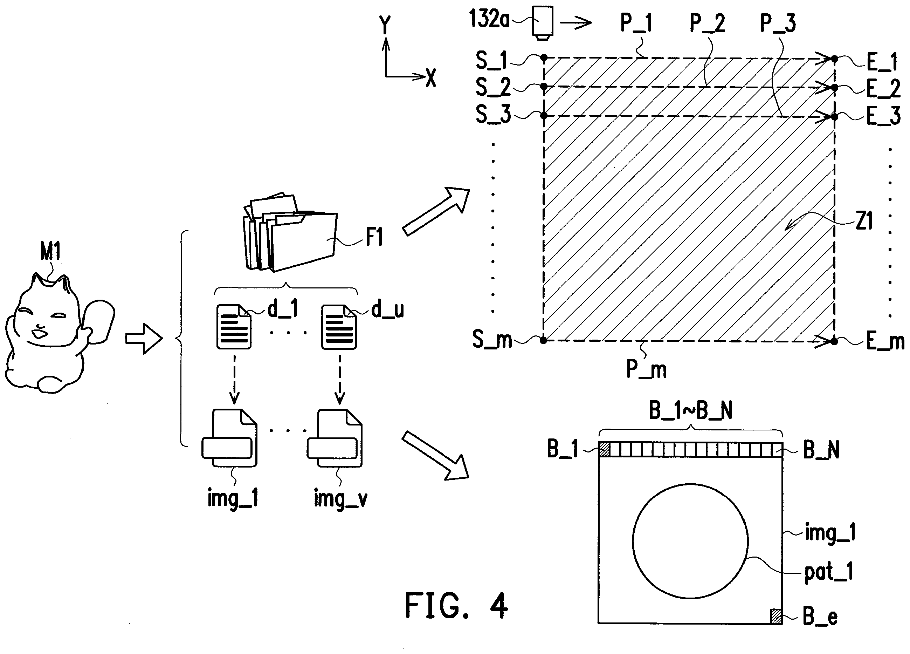

FIG. 4 is a schematic view of a color 3D printing method according to the invention. Referring to FIG. 4, a 3D model M1 is performed the slicing processing to generate a printing path file F1 and v inkjet images img_1 to img v, wherein v is a positive integer. The printing path file F1 includes u layer controlling data d_1 to d_u, wherein u is a positive integer. The inkjet images img_1 to img_v respectively relate to one of the different layer controlling data d_1 to d_u. For example, the inkjet image img_1 relates to the layer controlling data d_1, and the inkjet image img_v relates to the layer controlling data d_u. It should be stated that each of the layer controlling data d_1 to d_u includes inkjet head positioning information and printing head positioning information. The inkjet head positioning information includes a plurality of the inkjet position points to control the movement of the inkjet head 132a. The printing head positioning information includes a plurality of the printing position points to control the movement of the printing head 131 a.

FIG. 4 takes the first inkjet image img_1 and the first layer controlling data d_1 as example. After printing a layer object according to the printing position points in the layer controlling data d_1, the controller 133 reads the coordinates of the inkjet position points in first layer controlling data d_1. The inkjet position points recorded in the first layer controlling data d_1 include m inkjet starting points S_1, S_2, S_3, ..., S_m and m inkjet end points E_1, E_2, E_3, ..., E_m. The inkjet starting points S_1, S_2, S_3, ..., S_m one to one correspond to the plurality of the inkjet end points E_1, E_2, E_3, ..., E_m. In addition, the inkjet position points recorded in the first layer controlling data d_1 also include an inkjet range starting point and an inkjet range end point defining a size and a position of an inkjet range Z1. In this example, the inkjet starting point S_1 is the inkjet range starting point, the inkjet end point E_m is the inkjet range end point, and the inkjet starting point and the inkjet end point are diagonal vertices of the inkjet range Z1. The movement path of the inkjet head 132a is determined according to these inkjet starting points S_1, S_2, S_3, ..., S_m and the inkjet end points E_1, E_2, E_3, ..., E_m.

Based on the above, the controller 133 may associate the inkjet range starting point (i.e., the inkjet starting point S_1) with a starting point pixel B_1 of the first inkjet image img_1, and associate the inkjet range end point (i.e., the inkjet end point E_m) with an end point pixel B_e of the first inkjet image img_1 so that an inkjet order corresponding to each pixel of the first inkjet image img_1 is determined. In detail, the first inkjet image img_1 is composed of a plurality of pixels. For instance, the first row pixels of the first inkjet image img_1 include n-th pixels B_1 to B_n. Each of the plurality of the pixels B_1 to B_n has corresponding pixel color data. After the controller 133 associates the inkjet range starting point with the starting point pixel B_1 and associates the inkjet end point with the first inkjet end point pixel B_e, an inkjet order of each pixel of the first inkjet image img_1 is determined. Take the first row pixels B_1 to B_n as an example, the pixel color data of the first row pixels B_1 to B_n are sequentially read from left to right and printed accordingly.

Further, the controller 133 may control the inkjet head 132a to move along an inkjet path P_1 between the inkjet starting point S_1 among the inkjet starting points S_1 to S_m and the inkjet end point E_1 among the inkjet end points E_1 to E_m. Meanwhile, the controller 133 controls the inkjet head 132a according to the pixels B_1 to B_n corresponding to the first inkjet path P_1 on the first inkjet image img_1 to spray the ink on the layer object. Then, the controller 133 controls the inkjet head 132a to move from the first inkjet end point E_1 to the inkjet starting point S_2 among the inkjet starting points S_1 to S_m, meanwhile, the inkjet head 132a stops spraying ink. Then, the controller 133 controls the inkjet head 132a to move along a second inkjet path P_2 between the inkjet starting point S_2 and the inkjet end point E_2 among the inkjet end points E_1 to E_m. Meanwhile, the controller 133 controls the inkjet head 132a according to pixels corresponding to the second inkjet path P_2 on the first inkjet image img_1 to spray the ink on the layer object. Repeat the above operations. Finally, the controller 133 controls the inkjet head 132a to move along the second inkjet path P_m between the inkjet starting point S_m and the inkjet end point E_m. In the meanwhile, the controller 133 controls the inkjet head 132a according to the last row pixels corresponding to the second inkjet path P_m on the first inkjet image img_1 to spray the ink on the layer object. Such that, the controller 133 controls the inkjet head 132a to move by row and according the pixel color data of each pixel on the first inkjet image img_1 determines whether to spray the ink and ink color so that an ink layer of an inkjet pattern Pat_1 will be coated on the corresponding layer object.

However, it should be stated that, in the circumstance that a bottom surface (attached to a surface of a stage, such as the stage 134 in FIG. 2) or a suspended bottom surface of the 3D printing model has color appearance, if the printing and inkjet are performed at the actual height in the 3D model, the 3D printing device will spray the ink before printing the layer object, causing that the ink is sprinkled out in the air and stains the layer object below, and the 3D object has color missing. Accordingly, the present invention describes a method for adjusting the inkjet position of the disclosure.

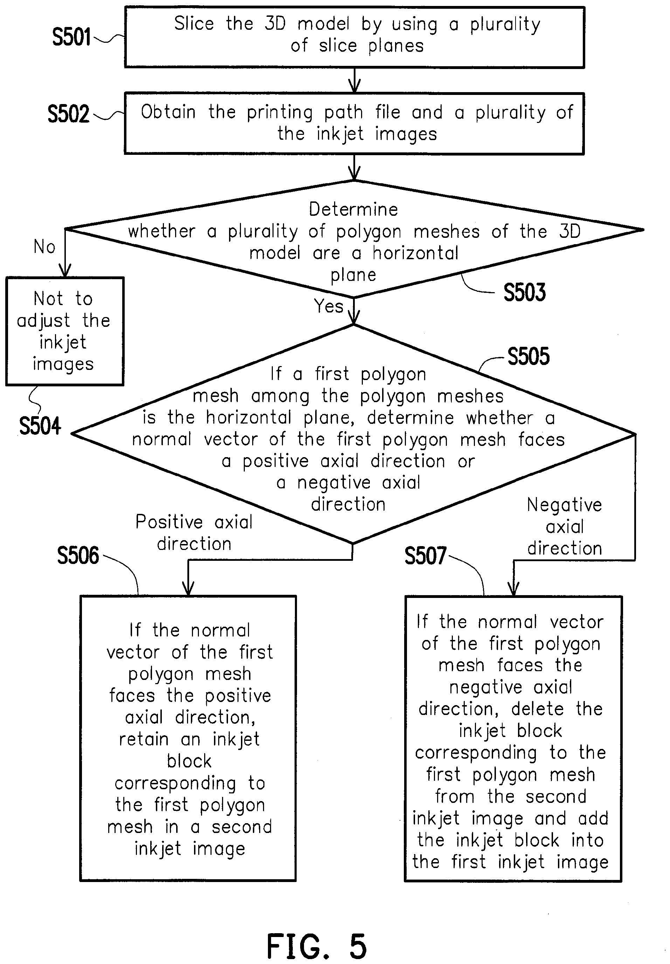

FIG. 5 is a flowchart of adjusting an inkjet position on a horizontal plane according to the invention. The method of the embodiment is applied to the 3D printing equipment 100 of FIG. 1 and the 3D printing device 130 of FIG. 2. Hereinafter, the detailed steps of the 3D printing method of the invention are described with the components in the 3D printing equipment 100 and the 3D printing device 130.

In step S501, the processor 120 slices the 3D model by using a plurality of slice planes. In step S502, the processor 120 obtains the printing path file and a plurality of the inkjet images. It should be stated that the inkjet images include the first inkjet image corresponding to the first layer object and the second inkjet image corresponding to the second layer object, and a printing order of the first layer object is later than a printing order of the second layer object. In other words, the first layer object stacks on the second layer object. In step S503, the processor 120 determines whether a plurality of polygon meshes of the 3D model are a horizontal plane. The 3D model is composed of the plurality of polygon meshes, which may be triangular meshes, quadrilateral meshes, other concave geometric polygon meshes, or other convex geometric polygon meshes, and the disclosure is not limited thereto. A polygon mesh includes multiple vertices, multiple edges and a face. In this embodiment, the processor 120 determines whether the faces of the plurality of polygon meshes are horizontal planes. Here, the horizontal plane of this embodiment is parallel to the XY plane.

In an embodiment, the slice planes for slicing processing of the processor 120 includes a first slice plane and a second slice plane adjacent to each other. The processor 120 determines whether a plurality of vertices of a first polygon mesh in the polygon meshes are located in a space between the first slice plane and the second slice plane. For instance, the mathematical expression of the first slice plane is Z=a, and the mathematical expression of the second slice plane is Z=b. The processor 120 determines whether Z-axis coordinates of three vertices of a triangular mesh are between a and b to determine whether the three vertices of the triangular mesh are in the space between the first slice plane and the second slice plane. It should be noted that when all the three vertices of the triangular mesh just fall on the first slice plane or the second slice plane, the three vertices of the triangular mesh are determined to be located in the space between the first slice plane and the second slice plane. In an embodiment, if a layer thickness is h, when the three vertices of the first polygon mesh lie in the space between the first slice plane (the mathematical expression is Z=a-0.5h) and the second slice plane (the mathematical expression is Z=a+0.5h), the processor 120 determines that the first polygon mesh belongs to the a-th layer of layer object and is a horizontal plane. Then, if each of the vertices of the first polygon mesh is located in the space between the first slice plane and the second slice plane, the processor 120 determines that the first polygon mesh is a horizontal plane. If the vertices of the first polygon cell are not all located in the space between the first slice plane and the second slice plane, the processor 120 determines that the first polygon mesh is not a horizontal plane.

Then, if the processor 120 determines that the plurality of the polygon meshes are not the horizontal plane (determined as No in step S503), in step S504, a primary inkjet image is not adjusted by the processor 120. In step S505, if the first polygon mesh among the polygon meshes is the horizontal plane, the processor 120 determines that a normal vector of the first polygon mesh faces a positive axial direction or a negative axial direction, and the normal vector of the first polygon mesh is a normal vector of the face, which vector direction is point toward outside of the 3D model. Since the definition of the horizontal plane of this embodiment is the XY plane, the positive axial direction is a positive Z-axis direction and the negative axial direction is a negative Z-axis direction. By determining whether the normal vector of the first polygon mesh faces the positive axial direction or the negative direction, the processor 120 can know that the first polygon mesh being the horizontal plane corresponds to a sealing top surface or a sealing bottom surface of the 3D object. The sealing bottom surface includes a lowest bottom surface and the suspended bottom surface of the 3D object.

In step S506, if the normal vector of the first polygon mesh faces the positive axial direction, the processor 120 retains an inkjet block corresponding to the first polygon mesh in the second inkjet image corresponding to the second layer object. In other words, if the normal vector of the first polygon mesh faces the positive axial direction, it represents that the first polygon mesh corresponds to the sealing top surface of the 3D object. In this sense, the processor 120 does not change the inkjet block corresponding to the first polygon mesh and retains the inkjet block corresponding to the first polygon mesh in the second inkjet image corresponding to the second layer object. In step S507, if the normal vector of the first polygon mesh faces the negative axial direction, the processor 120 deletes the inkjet block corresponding to the first polygon mesh from the second inkjet image and adds an inkjet block in the first inkjet image. In other words, if the normal vector of the first polygon mesh faces the negative axial direction, it represents that the first polygon mesh corresponds to the sealing bottom surface of the 3D object. In this sense, the processor 120 deletes the inkjet block corresponding to the first polygon mesh from the second inkjet image originally corresponding to the second layer object and adds the inkjet block corresponding into the first polygon mesh to the first inkjet image corresponding to the former layer object (namely, the first layer object stacked on the second layer object).

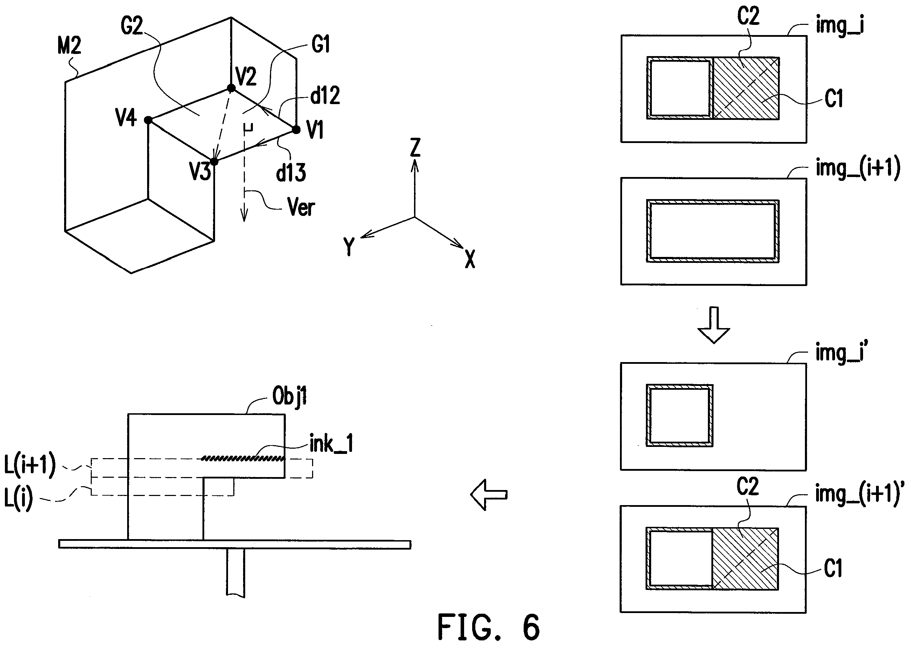

For instance, FIG. 6 is a schematic view of adjusting an inkjet position on a horizontal plane according to an embodiment of the disclosure. Referring to FIG. 6, after performs the slicing processing on a 3D model M2, the processor 120 discovers that three vertices V1, V2 and V3 of a triangular mesh G1 are provided between two adjacent slice planes. Thus, the processor 120 determines that the triangular mesh G1 is the horizontal plane. It should be stated that an order of the vertices V1, V2 and V3 of the triangular mesh G1 is defined in advance according to the inside and outside space of the 3D model. Generally, the normal vector of the face of each triangular mesh of the 3D model faces the eternal space of the 3D model. Accordingly, the processor 120 may obtain a vector d12 and a vector d13 and perform cross product on the vector d12 and a vector d13 to obtain a normal vector Ver. Since the processor 120 determines that the normal vector Ver faces the negative Z-axis direction, the processor 120 adjusts the inkjet position of the inkjet block of the triangular mesh G1. Similarly, the processor 120 may determine according to the similar process that the triangular mesh G2 is a horizontal plane having the normal vector downward and adjust the inkjet position of the inkjet block of the triangular mesh G2 as described above.

As shown in FIG. 6, before the inkjet position of the inkjet block of the horizontal plane is adjusted, a primary inkjet image img_i corresponding to a layer object L(i) of the i-th layer includes an inkjet block C1 corresponding to the triangular mesh G1 and an inkjet block C2 corresponding to the triangular mesh G2. The inkjet block C1 corresponding to the triangular mesh G1 and the inkjet block C2 corresponding to the triangular mesh G2 are not included in the primary inkjet image img_(i+1) corresponding to a layer object L(i+1) of the (i+1)-th layer. After adjusting the inkjet position of the inkjet block of the horizontal plane according to steps S503 to S507 shown in FIG. 5, the inkjet block C1 corresponding to the triangular mesh G1 and the inkjet block C2 corresponding to the triangular mesh G2 are not included in an inkjet image img_i' corresponding to the layer object L(i) of the i-th layer. The inkjet block C1 corresponding to the triangular mesh G1 and the inkjet block C2 corresponding to the triangular mesh G2 are included in an inkjet image img_(i+1)' corresponding to the layer object L(i+1) of the (i+1)-th layer. It should be stated that the example shown by FIG. 6 illustrates the case that pixels in the inkjet block C1 and inkjet block C2 completely replace the original pixels located at the corresponding pixel position on the original inkjet image img_(i+1) to generate the inkjet image img_(i+1)' illustrated by FIG. 6, but the disclosure is not limited thereto. In another embodiment, the pixels in the inkjet block C1 and the inkjet block C2 may partially replace the original pixels located at the corresponding pixel position on the original inkjet image img_(i+1) to retain the partial pixels on the original inkjet image img_(i+1) to generate a new inkjet image.

Such that, during the period in which the 3D printing device 130 establishes a colored 3D object Obj1 according to the 3D model M2, the controller 133 controls the printing head 131a according to the layer controlling data to print the layer object L(i) and further reads the inkjet image img_i' corresponding to the layer object L(i) among the plurality of the inkjet images. Such that, the controller 133 controls the inkjet head 132a according to the inkjet image img_i' to spray the ink on the layer object L(i). Briefly, after the printing head 131a prints the layer object L(i), the inkjet head 132a sprays the ink on the layer object L(i) according to the inkjet image img_i'. Then, after the printing head 131a prints the layer object L(i+1) stacked on the layer object L(i), the inkjet head 132a sprays the ink on the layer object L(i+1) according to the inkjet image img_(i+1)'. The inkjet position of the inkjet blocks C1 and C2 will be raised from the lower of the layer object L(i+1) to the upper of the layer object L(i+1). The ink layer ink_1 sprayed by the inkjet head 132a according to each of the pixels of the inkjet blocks C1 and C2 is attached on the layer object L(i+1) instead of sprinkling in the air.

To sum up, the color 3D printing method and 3D printing equipment of the invention use the printing head to form the layer object on the forming stage and then use the inkjet head to form the ink layer on the layer object to directly dye. Repeatedly, the layer object and the ink layer sequentially stacks across each other so that the colored 3D object is formed. In this sense, the structure of each layer of the colored 3D object has a colored appearance such that the overall color property is improved. Also, different regions of each color ink layer may have different colors to improve color variability. In addition, adjusting the inkjet position of the inkjet block of the horizontal plane may avoid the inkjet head from sprinkling the ink in the air before the sealing bottom surface establishes the layer object for holding the ink to cause level difference between the color property of the 3D object and the 3D model.

**Symbol Description**

| | | | |
|---|---|---|---|
| 100 :3D | printing equipment | 131 : | printing mechanism |
| 110 : | storage device | 132 : | inkjet mechanism |
| 120 : | processor | 20a : | forming material |
| 130 :3D | printing device | 80 ,Obj1 : | 3D object |
| 133 : | controller | 131a: | printing head |
| 132a: | inkjet head | 132b | ink cartridge |
| I1 : | ink | 134 : | stage |
| S1 : | carrying surface | 80a ,80c : | layer object |
| 80b80d : | ink layer | M1 ,M2 : | 3D model |
| F1 : | printing path file | d_1∼d_u: | layer controlling data |
| img_1∼ img_v : | inkjet image | S_1∼S_m: | inkjet starting point |
| E_1∼E_m : | inkjet end point | B_1∼B_n, B_e : | pixel |
| P_1∼P_m: | inkjet path | Pat_1: | inkjet pattern |
| G1 ,G2 : | triangular mesh | VI ,V2 , V3 , V4 : | vertex |
| d12 ,d13 : | vector | Ver : | normal vector |
| C1 ,C2 : | inkjet block | ink_1 | ink layer |
| img_iimg_i' , img_(i+1) , img_(i+1)' : | inkjet image | | |
| ∼S301 , S305 , S501∼S507 : | step | | |

## Claims

1. A three-dimensional printing equipment for manufacturing a 3D object according to a 3D model (M1, M2), comprising
a storage device (110);
a processor (120) coupled to the storage device (100) and configured to perform a slicing processing on the 3D model (M1, M2) to obtain a printing path file (F1) and a plurality of inkjet images (img_1 ∼ img_v), wherein the printing path file (F1) comprises a plurality of layer controlling data (d_1∼d_u) respectively corresponding to a plurality of layer objects (80a, 80c),
and the processor (120) is further configured to:
determine whether a plurality of polygon meshes (G1, G2) of the 3D model (M1, M2) are a horizontal plane;
determine whether a normal vector (Ver) of a first polygon mesh (G1, G2) among the plurality of the polygon meshes (G1, G2) faces a positive axial direction or a negative axial direction if the first polygon mesh (G1, G2) is the horizontal plane; and
delete an inkjet block (C1 , C2) corresponding to the first polygon mesh (G1, G2) from a second inkjet image (img_i) and add the inkjet block (C1 , C2) into the first inkjet image (img_(i+1)) if the normal vector (Ver) of the first polygon mesh (G1, G2) faces the negative axial direction; and
a 3D printing device (130) connected to the processor (120), comprising:
a printing mechanism (131) comprising a printing head (131a);
an inkjet mechanism (132) comprising an inkjet head (132a); and
a controller (133) coupled to the printing mechanism (131) and the inkjet mechanism (132) and configured to:
read a first layer controlling data (d_1 ∼d_u) among the plurality of the layer controlling data (d_1 ∼d_u), wherein the first layer controlling data (d_1∼d_u) comprises a plurality of recorded printing position points and a plurality of recorded inkjet position points;
control movement of the printing head (131a) according to the printing position points and control the printing head (131a) to extrude a forming material to establish a first layer object (80a, 80c) among the plurality of the layer objects (80a, 80c);
read a first inkjet image (img_1∼img_v) among the plurality of the inkjet images (img_1∼img_v); and
control movement of the inkjet head (132a) on a plane according to the plurality of the inkjet position points and control the inkjet head (132a) to spray ink (I1) on the first layer object (80a, 80c) according to the first inkjet image (img_1∼ img_v).

2. The three-dimensional printing equipment according to claim 1, wherein the plurality of the inkjet position points comprise an inkjet range starting point and an inkjet range end point, and the inkjet range starting point and the inkjet range end point are served as diagonal vertices of an inkjet range (Z1),
wherein the controller (133) is configured to associate the inkjet range starting point among the plurality of the inkjet position points with a starting point pixel (B_1) of the first inkjet image (img_1∼img_v), and to associate the inkjet range end point among the plurality of the inkjet position points with an end point pixel (B_e) of the first inkjet image (img_1∼img_v) so that an inkjet order corresponding to each pixel (B_1∼B_n , B_e) of the first inkjet image (img_1∼img_v) is determined.

3. The three-dimensional printing equipment according to claim 2, wherein the plurality of the inkjet position points comprise a plurality of inkjet starting points (S_1 ∼S_m) and a plurality of inkjet end points (E_1∼E_m), the plurality of the inkjet starting points (S_1∼S_m) correspond one to one to the plurality of the inkjet end points (E_1∼E_m), the inkjet range starting point is one of the plurality of the inkjet starting points (S_1∼S_m) and the inkjet range end point is one of the plurality of the inkjet end points (E_1∼E_m).

4. The three-dimensional printing equipment according to claim 3, wherein the controller is configured to control the inkjet head (132a) to move along a first inkjet path (P_1∼P_m) between a first inkjet starting point (S_1∼S_m) among the plurality of the inkjet starting points (S_1∼S_m) and a first inkjet end point (E_1∼E_m) among the plurality of the inkjet end points (E_1∼E_m), and, in the meanwhile, to control the inkjet head (132a) to spray the ink (I1) on the first layer object (80a, 80c) according to pixels corresponding to the first inkjet path (P_1∼P_m) on the first inkjet image (img_1∼img_v),
wherein the controller (133) is configured to control the inkjet head (132a) to move from the first inkjet end point (E_1∼E_m) to a second inkjet starting point (S_1 ∼S_m) among the plurality of the inkjet starting points (S_1∼S_m);
wherein the controller (133) is further configured to control the inkjet head (132a) to move along a second inkjet path (P_1∼P_m) between the second inkjet starting point (S_1∼S_m) and a second inkjet end point (E_1∼E_m) among the plurality of the inkjet end points (E_1∼E_m), and, in the meanwhile, to control the inkjet head (132a) to spray the ink (I1) on the first layer object (80a, 80c) according to pixels corresponding to the second inkjet path (P_1∼P_m) on the first inkjet image (img_1∼img_v).

5. The three-dimensional printing equipment according to claim 1, wherein the processor (120) is configured to use a plurality of slice planes to slice the 3D model (M1, M2), the plurality of the slice planes comprise a first slice plane and a second slice plane adjacent to each other, and the plurality of the slice planes are perpendicular to the positive axial direction and the negative axial direction,
wherein the processor (120) is configured to determine whether a plurality of vertices (V1, V2, V3, V4) of the first polygon mesh (G1, G2) lie in a space between the first slice plane and the second slice plane and to determine that the first polygon mesh (G1, G2) is the horizontal plane if each of the plurality of the vertices (V1, V2, V3, V4) of the first polygon mesh (G1, G2) lies in the space between the first slice plane and the second slice plane.

6. The three-dimensional printing equipment according to claim 1, wherein the processor (120) is configured to retain the inkjet block corresponding to the first polygon mesh in a second inkjet image if the normal vector of the first polygon mesh faces the positive axial direction.

7. The three-dimensional printing equipment according to claim 1, wherein the controller (133) is further configured to: control the printing head (131a) according to a second layer controlling data (d_1∼d_u) to print a second layer object (80a, 80c) among the plurality of the layer objects (80a, 80c); read a second inkjet image (img_i') among the plurality of the inkjet images (img_1∼img_v); and control the inkjet head (132a) to spray the ink (I1) on the second layer object (80a, 80c) according to the second inkjet image (img_i'), wherein the first layer object (80a, 80c) is stacked on the second layer object (80a, 80c).

8. A color three-dimensional printing method adapted to a three-dimensional printing equipment, the three-dimensional printing equipment comprising a printing head (131a) and an inkjet head (132a) and able to manufacture a 3D object according to a 3D model (M1, M2), wherein the 3D object comprises a plurality of layer objects (80a, 80c) and the 3D model (M1, M2) comprises a plurality of polygon meshes (G1, G2) for defining the 3D object, the method comprising:
performing (S301) a slicing processing on the 3D model (M1, M2) to obtain a printing path file (F1) and a plurality of inkjet images (img_1∼img_v); wherein obtaining the plurality of inkjet images (img_1∼img_v) comprises:
determining (S503) whether the plurality of the polygon meshes (G1, G2) are a horizontal plane, and,
if a first polygon mesh (G1, G2) among the plurality of the polygon meshes (G1, G2) is the horizontal plane, determining (S505) whether the first polygon mesh (G1, G2) is a sealing bottom surface, and,
if the first polygon mesh (G1, G2) is the sealing bottom surface, deleting (S507) an inkjet block (C1, C2) corresponding to the first polygon mesh (G1, G2) from a second inkjet image (img_i) corresponding to the first polygon mesh (Gl, G2) after the slicing processing, and adding the inkjet block (C1, C2) into a first inkjet image (img_(i+1));
controlling (S303) movement of the printing head (131a) according to the printing path file (F1) and controlling the printing head (131a) to extrude a forming material to establish a first layer object (80a, 80c) among the plurality of the layer objects (80a, 80c); and
controlling (S305) movement of the inkjet head (132a) according to the printing path file (F1) and controlling the inkjet head (132a) to spray ink (I1) on the first layer object (80a, 80c) according to the first inkjet image (img_1∼img_v) among the plurality of the inkjet images (img_1∼img_v).

9. The color three-dimensional printing method according to claim 8, wherein the printing path file (F1) comprises a plurality of layer controlling data (d_1 ∼d_u) respectively corresponding to the plurality of the layer objects (80a, 80c), and each of the layer controlling data (d_1 ∼d_u) comprises a plurality of printing position points for controlling the printing head (131a) and a plurality of inkjet position points for controlling the inkjet head (132a).

10. The color three-dimensional printing method according to claim 8, wherein the step of determining whether the first polygon mesh (G1, G2) is the sealing bottom surface comprises: determining (S505) according to a normal vector (Ver) of the first polygon mesh (G1, G2).

11. The color three-dimensional printing method according to claim 8, wherein the inkjet head (132a) sprays ink (I1) on a second layer object (80a, 80c) according to the second inkjet image (img_i'), and the second layer object (80a, 80c) is stacked below the first layer object (80a, 80c).

## Patentansprüche

1. Eine dreidimensionale Druckeinrichtung zum Herstellen eines 3D-Objekts gemäß einem 3D-Modell (M1, M2), umfassend
ein Speichergerät (110);
einen Prozessor (120), der mit dem Speichergerät (100) gekoppelt und so konfiguriert ist, dass eine Schichtverarbeitung an dem 3D-Modell (M1, M2) durchführt wird, um eine Druckpfaddatei (F1) und eine Vielzahl von Tintenstrahlbildern (img_1∼img_v) zu erhalten, wobei die Druckpfaddatei (F1) eine Vielzahl von Schichtsteuerdaten (d_1∼d_u) umfasst, die jeweils einer Vielzahl von Schichtobjekten (80a, 80c) entsprechen,
und der Prozessor (120) ferner konfiguriert ist, um:
zu bestimmen, ob eine Vielzahl von Polygonnetzen (G1, G2) des 3D-Modells (M1, M2) eine horizontale Ebene sind;
Bestimmen, ob ein Normalenvektor (Ver) eines ersten Polygonnetzes (G1, G2) aus der Vielzahl der Polygonnetze (G1, G2) in eine positive axiale Richtung oder in eine negative axiale Richtung weist, wenn das erste Polygonnetz (G1, G2) die horizontale Ebene ist; und
Löschen eines Tintenstrahlblocks (C1, C2), der dem ersten Polygonnetz (G1, G2) entspricht, aus einem zweiten Tintenstrahlbild (img_i) und
Hinzufügen des Tintenstrahlblocks (C1, C2) in das erste Tintenstrahlbild (img_(i+1)), wenn der Normalenvektor (Ver) des ersten Polygonnetzes (G1, G2) in die negative axiale Richtung weist; und
eine 3D-Druckvorrichtung (130), die mit dem Prozessor (120) verbunden ist, umfassend:
einen Druckmechanismus (131) mit einem Druckkopf (131a);
einen Tintenstrahlmechanismus (132), der einen Tintenstrahlkopf (132a) umfasst; und
eine Steuerung (133), die mit dem Druckmechanismus (131) und dem Tintenstrahlmechanismus (132) gekoppelt und konfiguriert ist:
um Steuerdaten einer ersten Schicht (d1∼d_u) unter der Vielzahl der Schichtsteuerdaten (d1 ∼d_u) zu lesen, wobei die Steuerdaten der ersten Schicht (d1∼d_u) eine Vielzahl von aufgezeichneten Druckpositionspunkten und eine Vielzahl von aufgezeichneten Tintenstrahlpositionspunkten umfassen;
um das Bewegen des Druckkopfes (131a) gemäß den Druckpositionspunkten und Steuern des Druckkopfes (131a) zu steuern,
um ein Formmaterial zu extrudieren,
um ein erstes Schichtobjekt (80a, 80c) unter der Vielzahl der Schichtobjekte (80a, 80c) herzustellen;
um ein erstes Tintenstrahlbild (img_1∼img_v) unter der Vielzahl der Tintenstrahlbilder (img_1∼img_v) zu lesen; und
um die Bewegung des Tintenstrahlkopfes (132a) auf einer Ebene gemäß der Vielzahl der Tintenstrahlpositionspunkte zu steuern und
um den Tintenstrahlkopf (132a) zum Sprühen von Tinte (I1) auf das erste Schichtobjekt (80a, 80c) gemäß dem ersten Tintenstrahlbild (img_1 ∼img_v) zu steuern.

2. Die dreidimensionale Druckeinrichtung nach Anspruch 1, wobei die Vielzahl der Tintenstrahlpositionspunkte einen Tintenstrahlbereich-Startpunkt und einen Tintenstrahlbereich-Endpunkt umfasst und der Tintenstrahlbereich-Startpunkt und der Tintenstrahlbereich-Endpunkt als diagonale Scheitelpunkte eines Tintenstrahlbereichs (Z1) dienen, wobei die Steuerung (133) konfiguriert ist, den Tintenstrahlbereich-Startpunkt unter der Vielzahl der Tintenstrahlpositionspunkte einem Startpunktpixel (B_1) des ersten Tintenstrahlbildes (img_1 ∼img_v) zuzuordnen, und den Tintenstrahlbereichs-Endpunkt unter der Vielzahl der Tintenstrahlpositionspunkte einem Endpunktpixel (B_e) des ersten Tintenstrahlbildes (img_1∼img_v) zuzuordnen, so dass eine jedem Pixel (B_1∼B_n, B_e) des ersten Tintenstrahlbildes (img_1 ∼img_v) entsprechende Tintenstrahlreihenfolge bestimmt wird.

3. Die dreidimensionale Druckeinrichtung nach Anspruch 2, wobei die Vielzahl der Tintenstrahlpositionspunkte eine Vielzahl von Tintenstrahl-Startpunkten (S_1 ∼S_m) und eine Vielzahl von Tintenstrahl-Endpunkten (E_1∼E_m) umfasst, die Vielzahl der Tintenstrahl-Startpunkte (S_1 ∼S_m) entspricht eins zu eins der Vielzahl der Tintenstrahl-Endpunkte (E_1∼E_m), der Tintenstrahl-Bereichsstartpunkt ist einer der Vielzahl der Tintenstrahl-Startpunkte (S_1 ∼S_m) und der Tintenstrahl-Bereichsendpunkt ist einer der Vielzahl der Tintenstrahl-Endpunkte (E_1∼E_m).

4. Die dreidimensionale Druckeinrichtung nach Anspruch 3, wobei die Steuerung konfiguriert ist, um den Tintenstrahlkopf (132a) zu steuern, um sich entlang eines ersten Tintenstrahlpfades (P_1∼P_m) zwischen einem ersten Tintenstrahlstartpunkt (S_1∼S_m) unter der Vielzahl der Tintenstrahlstartpunkte (S_1∼S_m) und einem ersten Tintenstrahlendpunkt (E_1∼E_m) unter der Vielzahl der Tintenstrahlendpunkte (E_1∼E_m) zu bewegen, und in der Zwischenzeit den Tintenstrahlkopf (132a) zu steuern, um die Tinte (I1) auf das Objekt der ersten Schicht (80a, 80c) entsprechend den Pixeln zu sprühen, die dem ersten Tintenstrahlpfad (P_1∼P_m) auf dem ersten Tintenstrahlbild (img_1∼img_v) entsprechen,
wobei die Steuerung (133) so konfiguriert ist, dass sie den Tintenstrahlkopf (132a) so steuert, dass er sich von dem ersten Tintenstrahl-Endpunkt (E_1∼E_m) zu einem zweiten Tintenstrahl-Startpunkt (S_1∼S_m) aus der Vielzahl der Tintenstrahl-Startpunkte (S_1∼ S_m) bewegt;
wobei die Steuerung (133) ferner konfiguriert ist, um den Tintenstrahlkopf (132a) zu steuern, um sich entlang eines zweiten Tintenstrahlpfades (P_1∼P_m) zwischen dem zweiten Tintenstrahlstartpunkt (S_1∼S_m) und einem zweiten Tintenstrahlendpunkt (E_1∼E_m) unter der Vielzahl der Tintenstrahlendpunkte (E_1∼E_m) zu bewegen, und in der Zwischenzeit den Tintenstrahlkopf (132a) zu steuern, um die Tinte (I1) auf das Objekt der ersten Schicht (80a, 80c) entsprechend den Pixeln zu sprühen, die dem zweiten Tintenstrahlpfad (P_1∼P_m) auf dem ersten Tintenstrahlbild (img_1∼img_v) entsprechen.

5. Die dreidimensionale Druckeinrichtung nach Anspruch 1, wobei der Prozessor (120) so konfiguriert ist, dass er eine Vielzahl von Schichtebenen verwendet, um das 3D-Modell (M1, M2) zu schichten, die Vielzahl der Schichtebenen eine erste Schichtebene und eine zweite Schichtebene nebeneinander umfasst und die Vielzahl der Schichtebenen senkrecht zu der positiven axialen Richtung und der negativen axialen Richtung ist, wobei der Prozessor (120) konfiguriert ist, um zu bestimmen, ob eine Vielzahl von Scheitelpunkten (V1, V2, V3, V4) des ersten Polygonnetzes (G1, G2) in einem Raum zwischen der ersten Schichtebene und der zweiten Schichtebene liegt, und um zu bestimmen, dass das erste Polygonnetz (G1, G2) die horizontale Ebene ist, wenn jeder der Vielzahl der Scheitelpunkte (V1, V2, V3, V4) des ersten Polygonnetzes (G1, G2) in dem Raum zwischen der ersten Schichtebene und der zweiten Schichtebene liegt.

6. Die dreidimensionale Druckeinrichtung nach Anspruch 1, wobei der Prozessor (120) so konfiguriert ist, dass er den dem ersten Polygonnetz entsprechenden Tintenstrahlblock in einem zweiten Tintenstrahlbild festhält, wenn der Normalenvektor des ersten Polygonnetzes in die positive axiale Richtung weist.

7. Die dreidimensionale Druckeinrichtung nach Anspruch 1, wobei der Controller (133) weiter konfiguriert ist, um: den Druckkopf (131a) gemäß von zweiten Schicht Steuerdaten (d_1∼d_u) zu steuern, um ein Objekt (80a, 80c) der zweiten Schicht unter der Vielzahl der Schichtobjekte (80a, 80c) zu drucken; ein zweites Tintenstrahlbild (img_i') unter der Vielzahl der Tintenstrahlbilder (img_1∼img_v) zu lesen; und um den Tintenstrahlkopf (132a) zu steuern, um die Tinte (I1) gemäß dem zweiten Tintenstrahlbild (img_i') auf das zweite Schichtobjekt (80a, 80c) zu sprühen, wobei das erste Schichtobjekt (80a, 80c) auf das zweite Schichtobjekt (80a, 80c) gestapelt wird.

8. Ein dreidimensionales Farbdruckverfahren, das an eine dreidimensionale Druckeinrichtung angepasst ist, wobei die dreidimensionale Druckeinrichtung einen Druckkopf (131a) und einen Tintenstrahlkopf (132a) umfasst und in der Lage ist, ein 3D-Objekt gemäß einem 3D-Modell (M1, M2) herzustellen, wobei das 3D-Objekt eine Mehrzahl von Schichtobjekten (80a, 80c) umfasst und das 3D-Modell (M1, M2) eine Mehrzahl von Polygonnetzen (G1, G2) zum Definieren des 3D-Objekts umfasst, wobei das Verfahren umfasst:
Durchführen (S301) einer Schichtverarbeitung an dem 3D-Modell (M1, M2), um eine Druckpfaddatei (F1) und eine Vielzahl von Tintenstrahlbildern (img_1∼img_v) zu erhalten;
wobei das Erhalten der Vielzahl von Tintenstrahlbildern (img_1∼img_v) umfasst:
Bestimmen (S503), ob die Vielzahl der Polygonnetze (G1, G2) eine horizontale Ebene ist, und, wenn ein erstes Polygonnetz (G1, G2) unter der Vielzahl der Polygonnetze (G1, G2) die horizontale Ebene ist, Bestimmen (S505), ob das erste Polygonnetz (G1, G2) eine abdichtende Bodenfläche ist, und,
wenn das erste Polygonnetz (G1, G2) die abdichtende Bodenfläche ist, Löschen (S507) eines Tintenstrahlblocks (C1, C2), der dem ersten Polygonnetz (G1, G2) entspricht, aus einem zweiten Tintenstrahlbild (img_i), das dem ersten Polygonnetz (G1, G2) entspricht, nach der Schichtverarbeitung, und Hinzufügen des Tintenstrahlblocks (C1, C2) zu einem ersten Tintenstrahlbild (img_(i+1));
Steuern (S303) der Bewegung des Druckkopfes (131a) gemäß der Druckpfaddatei (F1) und Steuern des Druckkopfes (131a) zum Extrudieren eines Formmaterials, um ein erstes Schichtobjekt (80a, 80c) aus der Vielzahl der Schichtobjekte (80a, 80c) zu erzeugen; und
Steuern (S305) der Bewegung des Tintenstrahlkopfes (132a) gemäß der Druckpfaddatei (F1) und Steuern des Tintenstrahlkopfes (132a) zum Sprühen von Tinte (I1) auf das erste Schichtobjekt (80a, 80c) gemäß dem ersten Tintenstrahlbild (img_1∼img_v) unter der Vielzahl der Tintenstrahlbilder (img_1∼img_v).

9. Das dreidimensionale Farbdruckverfahren nach Anspruch 8, wobei die Druckpfaddatei (F1) eine Vielzahl von Schichtsteuerdaten (d_1∼d_u) umfasst, die jeweils der Vielzahl der Schichtobj ekte (80a, 80c) entsprechen, und jedes der Schichtsteuerdaten (d_1∼d_u) eine Vielzahl von Druckpositionspunkten zur Steuerung des Druckkopfes (131a) und eine Vielzahl von Tintenstrahlpositionspunkten zur Steuerung des Tintenstrahlkopfes (132a) umfasst.

10. Das dreidimensionales Farbdruckverfahren nach Anspruch 8, wobei der Schritt des Bestimmens, ob das erste Polygonnetz (G1, G2) die abdichtende Bodenfläche ist, umfasst: Bestimmen (S505) gemäß einem Normalvektor (Ver) des ersten Polygonnetzes (G1, G2).

11. Das dreidimensionales Farbdruckverfahren nach Anspruch 8, wobei der Tintenstrahlkopf (132a) Tinte (I1) auf ein Objekt (80a, 80c) einer zweiten Schicht gemäß dem zweiten Tintenstrahlbild (img_i') sprüht, und das Objekt (80a, 80c) der zweiten Schicht unter dem Objekt (80a, 80c) der ersten Schicht gestapelt ist.

## Revendications

1. Un équipement d'impression en trois dimensions pour fabriquer un objet 3D selon un modèle 3D (M1, M2), comprenant
un dispositif de stockage (110);
un processeur (120) couplé au dispositif de stockage (100) et configuré pour: effectuer un traitement de découpage sur le modèle 3D (M1, M2) pour obtenir un fichier de chemin d'impression (F1) et une pluralité d'images à jet d'encre (img_1∼img_v), dans lequel le fichier de chemin d'impression (F1) comprend une pluralité de données de contrôle de couche (d_1∼d_u) correspondant respectivement à une pluralité d'objets de couche (80a, 80c);
et le processeur (120) est en outre configuré pour :
déterminer si une pluralité de maillages polygonaux (G1, G2) du modèle 3D (M1, M2) sont un plan horizontal,
déterminer si un vecteur normal (Ver) d'un premier maillage polygonal (G1, G2) parmi la pluralité de maillages polygonaux (G1, G2) fait face à une direction axiale positive ou à une direction axiale négative si le premier maillage polygonal (G1, G2) est dans le plan horizontal ; et
supprimer un bloc jet d'encre (C1, C2) correspondant au premier maillage polygonal (G1, G2) d'une seconde image jet d'encre (img_i), et ajouter le bloc jet d'encre (C1, C2) dans la première image jet d'encre (img_(i + 1)) si le vecteur normal (Ver) du premier maillage polygonal (G1, G2) fait face à la direction axiale négative ; et
un dispositif d'impression 3D (130) connecté au processeur (120), comprenant :
un mécanisme d'impression (131) comprenant une tête d'impression (131a);
un mécanisme à jet d'encre (132) comprenant une tête à jet d'encre (132a); et
un contrôleur (133) couplé au mécanisme d'impression (131) et au mécanisme à jet d'encre (132) et configuré pour:
lire des données de commande d'une première couche (d_1∼d_u) parmi la pluralité des données de commande de couches (d_1∼d_u), dans lequel les données de commande de première couche (d_1∼d_u) comporte une pluralité de points de position d'impression enregistrés et une pluralité de points de positions de jet d'encre enregistrés ;
commander le mouvement de la tête d'impression (131a) en fonction des points de position d'impressions et commander la tête d'impression (131a) pour extruder un matériau de formation pour établir un premier objet de couche (80a, 80c) parmi la pluralité des objets de couche (80a, 80c);
lire une première image à jet d'encre (img_1∼img_v) parmi la pluralité d'images à jet d'encre (img_1∼img_v); et
commander le mouvement de la tête à jet d'encre (132a) sur un plan selon la pluralité des points de position de jet d'encre et commander la tête à jet d'encre (132a) pour pulvériser de l'encre (I1) sur le premier objet de couche (80a, 80c) selon la première image de jet d'encre (img_1∼img_v).

2. L'équipement d'impression tridimensionnel selon la revendication 1, dans lequel la pluralité des points de position de jet d'encre comprend un point de départ de plage de jet d'encre et un point final de plage de jet d'encre, et le point de départ de plage de jet d'encre et le point final de plage de jet d'encre sont servis comme sommets diagonaux d'une plage de jet d'encre (ZI),
dans lequel le contrôleur (133) est configuré pour associer le point de départ de la plage de jet d'encre parmi la pluralité de points de position de jet d'encre à un pixel de point de départ (B_1) de la première image à jet d'encre (img_1∼img_v), et pour associer le pont final de la plage de jet d'encre final parmi la pluralité de points de position de jet d'encre avec un pixel de point final (B_e) de la première image à jet d'encre (img_1∼img_v) de sorte qu'est déteriminée une instruction de jet d'encre correspondant à chaque pixel (E_1∼B_n, B_e) de la première image à jet d'encre (img_1∼img_v).

3. L'équipement d'impression tridimensionnel selon la revendication 2, dans lequel la pluralité de points de position de jet d'encre comprend une pluralité de points de départ de jet d'encre (S_1∼S_m) et une pluralité de points d'extrémité de jet d'encre (E_1∼E_m), la pluralité de points de départ de jet d'encre les points (S_1∼S_m) correspondant un à un à la pluralité des points d'extrémité du jet d'encre (E_1∼E_m), le point de départ de la plage de jet d'encre étant l'un parmi la pluralité des points de départ du jet d'encre (S_1∼S_m) et le point final de la plage du jet d'encre étant l'un de la pluralité des points d'extrémité du jet d'encre (E_1∼E_m).

4. L'équipement d'impression tridimensionnel selon la revendication 3, dans lequel le contrôleur commande la tête à jet d'encre (132a) pour se déplacer le long d'un premier trajet de jet d'encre (P_1∼P_m) entre un premier point de départ de jet d'encre (S_1∼S_m) parmi la pluralité des points de départ de jet d'encre (S_1∼S_m) et un premier point final de jet d'encre (E_1∼E_m) parmi la pluralité des points finaux de jet d'encre (E_1∼E_m), et, dans l'intervalle, commander la tête à jet d'encre (132a) pour pulvériser l'encre (I1) sur le premier objet de couche (80a, 80c) selon des pixels correspondant au premier chemin de jet d'encre (P_1∼P_m) sur la première image à jet d'encre (img_1∼img_v),
dans lequel le contrôleur (133) est configuré pour commander le déplacement de la tête à jet d'encre (132a) depuis le premier point final de jet d'encre (E_1∼E_m) jusqu'à un second point de départ de jet d'encre (S_1∼S_m) parmi la pluralité de points de départ de jet d'encre (S_1∼S_m);
dans lequel le contrôleur (133) est en outre configuré pour commander à la tête à jet d'encre (132a) de se déplacer le long d'un deuxième chemin de jet d'encre (P_1∼P_m) entre le deuxième point de départ de jet d'encre (S_1∼S_m) et un deuxième point final de jet d'encre (E_1∼E_m) parmi la pluralité des points finaux de jet d'encre (E_1∼E_m), et, en attendant, de commander la tête à jet d'encre (132a) pour pulvériser l'encre (I1) sur le premier objet de couche (80a, 80c) en fonction de pixels correspondant au deuxième chemin de jet d'encre (P_1 ∼P_m) sur la première image jet d'encre (img_1∼img_v).

5. L'équipement d'impression tridimensionnel selon la revendication 1, dans lequel le processeur (120) utilise une pluralité de plans de coupe pour découper le modèle 3D (M1, M2), la pluralité des plans de tranche comprend un premier plan de coupe et un second plan de coupe adjacents l'un à l'autre, et la pluralité de plans de coupe sont perpendiculaires à la direction axiale positive et à la direction axiale négative,
dans lequel le processeur (120) est configuré pour déterminer si une pluralité de sommets (V1, V2, V3, V4) du premier polygone le maillage (G1, G2) se trouve dans un espace entre le premier plan de coupe et le deuxième plan de coupe, et pour déterminer que le premier maillage polygonal (G1, G2) est le plan horizontal si chacun de la pluralité des sommets (V1, V2, V3, V4) du premier maillage polygonal (G1, G2) se situe dans l'espace entre le premier plan de coupe et le deuxième plan de coupe.

6. L'équipement d'impression tridimensionnel selon la revendication 1, dans lequel le processeur (120) est configuré pour conserver le bloc à jet d'encre correspondant au premier maillage polygonal dans une seconde image à jet d'encre si le vecteur normal du premier maillage polygonal fait face à la direction axiale positive.

7. L'équipement d'impression tridimensionnel selon la revendication 1, dans lequel le contrôleur (133) est en outre configuré pour: commander la tête d'impression (131a) selon des secondes données de commande de couche (d_1∼d_u) pour imprimer un deuxième objet de couche (80a, 80c) parmi la pluralité des objets de couche (80a, 80c); lire une seconde image à jet d'encre (img_i') parmi la pluralité d'images à jet d'encre (img_1∼img et commander la tête à jet d'encre (132a) pour pulvériser l'encre (I1) sur le deuxième objet de couche (80a, 80c) selon la deuxième image à jet d'encre (img_i'), dans lequel le premier objet de couche (80a, 80c) est empilé sur le deuxième objet de couche (80a, 80c).

8. Un procédé d'impression tridimensionnel couleur adapté à un équipement d'impression tridimensionnel, l'équipement d'impression tridimensionnel comprenant une tête d'impression (131a) et une tête à jet d'encre (132a) et capable de fabriquer un objet 3D selon un modèle 3D (M1, M2), dans lequel l'objet 3D comprend une pluralité d'objets de couche (80a, +80c), et le modèle 3D (M1, M2) comporte une pluralité de maillages polygonaux (G1, G2) pour définir un objet 3D, le procédé comprenant:
l'exécution (S301) d'un traitement de découpage sur le modèle 3D (M1, M2) pour obtenir un fichier de chemin d'impression (F1) et une pluralité d'images à jet d'encre (img_1∼img_v); dans lequel l'obtention de la pluralité d'images à jet d'encre (img_1∼img_v)comporte :
déterminer (S503) si la pluralité de maillages polygonaux (G1, G2) sont dans un plan horizontal ; et ,
si un maillage horizontal (G1 G2) au sein de la pluralité de maillages polygonaux (G1, G2) est dans le plan horizontal, déterminer (S505) si le premier maillage polygonal est une surface de fond est une surface inférieure étanche, et,
si le premier maillage polygonal (G1, G2) est la surface inférieure étanche, supprimer (S507) d'un bloc de jet d'encre (C1-C2) correspondant au premier maillage polygonal (G1, G2) d'une seconde image de jet d'encre (img_i) correspondant au premier maillage polygonal (G1, G2) à la suite du traitement de découpe, et ajouter le block à jet d'encre (C1-C2) dans une premier imagine de jet d'encre (img_(i+1)) ;
commander (S303) le mouvement de la tête d'impression (131a) selon le fichier de chemin d'impression (F1) et commander la tête d'impression (131a) pour pulvériser de l'encre (I1) sur le premier objet de couche (80a, 80c) en fonction de la première image de jet d'encre (img_1∼img_v)parmi la pluralité d'images à jet d'encre (img_1∼img_v).

9. Le procédé d'impression tridimensionnel couleur selon la revendication 8, dans lequel le fichier de chemin d'impression (F1) comporte une pluralité de données de commande de couche (d_1∼d_u) correspondant respectivement à la pluralité d'objets de couche (80a, 80c), et chacune des données de commande de couche (d_1∼d_u) comporte une pluralité de points de position d'impression pour commander la tête d'impression (131a) et une pluralité de points de position de jet d'encre pour commander la tête à jet d'encre (132a).

10. Le procédé d'impression tridimensionnel couleur selon la revendication 8, dans l'étape consistant à déterminer si le premier maillage (G1, G2) est la surface inférieure étanche comportant : la détermination (S505) selon un vecteur normal (Ver) du premier maillage polygonal (G1, G2).

11. Le procédé d'impression tridimensionnel couleur selon la revendication 10, dans lequel la tête à jet d'encre (132a) pulvérise l'encre (11) sur un second objet de couche (80a, 80c) selon la seconde image de jet d'encre (img_i'), et le second objet de couche (80a, 80c) est empilé sous le premier objet de couche (80a, 80c).
